# EUROPÄISCHE PATENTANMELDUNG

(11) **EP 3 409 549 A1**
(43) Veröffentlichungstag der Anmeldung: **05.12.2018**
(21) Anmeldenummer: 18174525.8
(22) Anmeldetag: 28.05.2018
(51) Int. Cl.: B60W 30/06, B60W 30/09, B60W 30/095, B60W 30/18, G01S 15/93, B62D 15/02

(54) **VERFAHREN UND SYSTEM ZUR BESTIMMUNG EINES DREHMOMENTS ODER EINER BESCHLEUNIGUNG AM ENDE EINER TRAJEKTORIE**

(30) Priorität: 31.05.2017 DE 102017111874
(71) Anmelder: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)

(57) **Zusammenfassung**

Das automatische Führen eines Kraftfahrzeugs soll sicherer gestaltet werden. Dazu wird ein Verfahren einschließlich eines Erfassen eines Höhenprofils einer von dem Kraftfahrzeug abzufahrenden Trajektorie (10) und Bereitstellen eines Drehmoments oder einer Beschleunigung in Abhängigkeit von dem Höhenprofil vorgeschlagen. Es erfolgt ein Ermitteln eines Endwerts (9) der Trajektorie (10), wobei das Drehmoment oder die Beschleunigung auch von dem Endwert der Trajektorie (10) abhängig bereitgestellt wird.

## Beschreibung

Die vorliegende Erfindung betrifft ein Verfahren zum automatisierten Führen eines Kraftfahrzeugs durch Erfassen eines Höhenprofils einer von dem Kraftfahrzeug abzufahrenden Trajektorie und Bereitstellen eines Drehmoments oder einer Beschleunigung in Abhängigkeit von dem Höhenprofil. Darüber hinaus betrifft die vorliegende Erfindung ein Fahrerassistenzsystem zur Durchführung eines solchen Verfahrens sowie ein Kraftfahrzeug mit einem derartigen Fahrerassistenzsystem.

Das automatisierte Führen eines Kraftfahrzeugs kann ein autonomes oder semi-autonomes Fahren bedeuten. In jedem Fall wird der Fahrer beim Fahren durch ein entsprechendes Assistenzsystem unterstützt. Dazu ist das Kraftfahrzeug mit entsprechender Sensorik auszustatten, die die Umgebung des Kraftfahrzeugs erfasst. Hierzu werden beispielsweise befahrbare und nicht befahrbare Bereiche erfasst und entsprechend klassifiziert. Gegebenenfalls können auch Höhenprofile im Umfeld des Kraftfahrzeugs erfasst werden. Beispielsweise können mehr oder weniger hohe Bordsteine als überfahrbar oder nicht überfahrbar erkannt werden. So können unter Umständen niedrige Bordsteine zum Erreichen einer Parkposition von dem Kraftfahrzeug automatisiert überwunden werden. Dazu ist es notwendig, dass das Kraftfahrzeug beim Erreichen des Bordsteins ein entsprechendes Drehmoment beziehungsweise eine entsprechende Beschleunigung aufbringt. Nur so kann sichergestellt werden, dass das Kraftfahrzeug auch den Bordstein überwinden kann. Dabei richtet sich das aufzubringende Drehmoment beziehungsweise die aufzubringende Beschleunigung nach der Höhe des Bordsteins beziehungsweise nach dem entsprechenden Höhenprofil. Eine ähnliche Problematik gilt bei ansteigendem beziehungsweise abfallendem Gelände. Gegebenenfalls müssen entsprechend negative Drehmomente beziehungsweise negative Beschleunigungen bereitgestellt werden.

Automatisiert geführte Kraftfahrzeuge sind gegebenenfalls auch in der Lage, vorgegebene Trajektorien abzufahren. So kann beispielsweise eine Trajektorie gelernt und in einem Wiederholvorgang von einer Speichereinheit abgerufen und vom Kraftfahrzeug automatisiert abgefahren werden. Eine solche Trajektorie führt von der aktuellen Position des Kraftfahrzeugs zu einem Endpunkt. Der Endpunkt kann beispielsweise eine Parkposition repräsentieren. Andererseits kann der Endpunkt aber auch einen geschätzten Kollisionspunkt mit einem Objekt darstellen. Auch andere Endpunkte von Trajektorien sind möglich.

Aus der Druckschrift DE 10 207 061 234 A1 ist ein Verfahren und eine Vorrichtung zum Anpassen der Führung eines Kraftfahrzeugs in einem Bereich, der mindestens ein Hindernis aufweist, bekannt. Das Verfahren umfasst die Schritte des Bestimmens des Höhenprofils einer Trajektorie, der das Kraftfahrzeug bei einer Führung in den Bereich folgen soll, und des Anpassens der Führung des Kraftfahrzeugs an das bestimmte Höhenprofil. Die Motor- und Bremsansteuerung kann an der notwendigen Stelle schon vor einer starken Änderung im Höhenprofil und einer damit einhergehenden Verlangsamung/Beschleunigung des Kraftfahrzeugs automatisch angepasst werden. So kann beispielsweise vor dem Überfahren eines niedrigen Bordsteins das Motormoment erhöht werden, um eine Absenkung der Geschwindigkeit zu vermeiden. Auf diese Weise kann das erkannte aber überfahrbare Hindernis mit der geforderten Einparkgeschwindigkeit passiert werden.

Es besteht jedoch die Problematik, dass eine Trajektorie mit einem gewissen Höhenprofil in ein begrenztes Territorium führt. Dies ist insbesondere häufig bei Parkvorgängen der Fall, bei denen die Trajektorie in eine Parklücke führt. Soll dabei noch ein kleiner Bordstein überwunden werden, so kann dies zu Problemen führen, wenn das Kraftfahrzeug nach Überwinden des Bordsteins nicht rechtzeitig abgebremst werden kann.

Die Aufgabe der vorliegenden Erfindung besteht somit darin, ein Verfahren zum automatisierten Führen eines Kraftfahrzeugs bereitzustellen, das es ermöglicht, bei unebenem und begrenztem Gelände ein Ende einer Trajektorie sicherer zu erreichen.

Erfindungsgemäß wird diese Aufgabe durch ein Verfahren, ein Fahrerassistenzsystem und ein Kraftfahrzeug gemäß den unabhängigen Ansprüchen gelöst. Vorteilhafte Weiterbildungen der Erfindung ergeben sich aus den Unteransprüchen.

Entsprechend der vorliegenden Erfindung wird demnach ein Verfahren zum automatisierten Führen eines Kraftfahrzeugs durch Erfassen eines Höhenprofils einer von dem Kraftfahrzeug abzufahrenden Trajektorie und Bereitstellen eines Drehmoments oder einer Beschleunigung in Abhängigkeit von dem Höhenprofil bereitgestellt. Bei dem automatisierten Führen des Kraftfahrzeugs wird der Fahrer unterstützt, indem das Kraftfahrzeug zumindest semi-autonom, also semi-autonom oder autonom, entlang der vorbestimmten Trajektorie geführt, z.B. in eine Parklücke eingeparkt wird. Beim semi-autonomen Manövrieren übernimmt das Fahrerassistenzsystem eine Lenkung des Kraftfahrzeugs, während der Fahrer des Kraftfahrzeugs das Gaspedal sowie die Bremse des Kraftfahrzeugs betätigt. Beim autonomen beziehungsweise vollautonomen Manövrieren betätigt das Fahrerassistenzsystem zusätzlich zu der Lenkung auch das Gaspedal und die Bremse, sodass das Kraftfahrzeug automatisch gelenkt, beschleunigt und abgebremst wird.

Die Sensorik des Kraftfahrzeugs beziehungsweise Kraftfahrzeugs erfasst nun das Höhenprofil der abzufahrenden Trajektorie. Dabei wird beispielsweise eine Trajektorie für einen Einparkvorgang festgelegt. Nun ist von der Sensorik beziehungsweise der Datenverarbeitungseinrichtung des Kraftfahrzeugs zu untersuchen, ob auf der Trajektorie Hindernisse zu überfahren oder Steigungen beziehungsweise Gefälle zu überwinden sind. Diese resultieren aus dem Höhenprofil. Zur Erfassung des Höhenprofils eignen sich zumindest ein Sensor, beispielsweise zumindest ein Ultraschallsensor und/oder zumindest ein Radarsensor und/oder zumindest ein Laserscanner. Das Höhenprofil kann mit gleichen oder unterschiedlichen Sensoren erfasst werden, welche verteilt am Kraftfahrzeug angeordnet sind.

Des Weiteren wird bei dem erfindungsgemäßen Verfahren ein Drehmoment oder eine Beschleunigung in Abhängigkeit von dem Höhenprofil bereitgestellt. Da das Höhenprofil auf der abzufahrenden Trajektorie erfasst ist, kann daraus auf das Drehmoment oder die Beschleunigung geschlossen werden, die das Kraftfahrzeug benötigt, um der Trajektorie bis zum Ziel zu folgen. Beispielsweise muss an dem Ort, an dem das Vorderrad einen Bordstein erreicht, ein erhöhtes Drehmoment aufgebracht werden. Ebenso kann kurz bevor das Vorderrad den Bordstein erreicht, eine erhöhte Beschleunigung des Kraftfahrzeugs erfolgen, damit das Kraftfahrzeug den Bordstein überwinden kann. Ähnliches gilt, wenn das Gelände beispielsweise zum Ziel beziehungsweise Endpunkt der Trajektorie hin ansteigt. Auch in diesem Fall ist gegen Ende der Trajektorie ein entsprechend erhöhtes Drehmoment aufzubringen. Wiederum kann das gleiche Ziel dadurch erreicht werden, dass vor dem Anstieg die Beschleunigung des Kraftfahrzeugs erhöht wird, sodass das Kraftfahrzeug mit erhöhter Anfangsgeschwindigkeit den Anstieg bewältigt. Sinngemäß kann dies auch ohne Weiteres auf ein Gefälle übertragen werden. Fällt nämlich das Gelände zum Endpunkt der Trajektorie hin ab, so ist entsprechend lokal das Drehmoment oder die Beschleunigung zu reduzieren oder sogar ein negatives Drehmoment beziehungsweise eine negative Beschleunigung aufzubringen. In einem solchen Fall muss beispielsweise die Bremse des Kraftfahrzeugs für das notwendige Abbremsen sorgen, damit das Kraftfahrzeug sicher den Endpunkt der Trajektorie erreicht. Häufig besteht nun die Problematik, dass der vom Kraftfahrzeug befahrbare Bereich begrenzt ist. Dies ist insbesondere bei Parklücken der Fall, bei denen angrenzende Kraftfahrzeuge die Parklücke bestimmen. Gleichermaßen kann eine Mauer einen befahrbaren Bereich begrenzen, über den die Trajektorie führt. Parkt das Kraftfahrzeug beispielsweise mit seiner Front an einer Mauer, so kann der Endwert der Trajektorie als Entfernung des Kraftfahrzeugs bis zum Endpunkt beziehungsweise Ziel, d.h. der Parkposition, gesehen werden. In diesem Fall stellt der Endwert also die Distanz dar, die das Kraftfahrzeug bis zum Ende der Trajektorie noch zurückzulegen hat. Alternativ kann der Endwert auch eine Zeitspanne sein, die das Kraftfahrzeug benötigt, um das Ende der Trajektorie zu erreichen. Beispielsweise benötigt das Kraftfahrzeug noch zwei Sekunden, um das Ende der Trajektorie zu erreichen. In diesem Beispielfall ist der Endwert der Trajektorie die Zeitdauer von zwei Sekunden.

Dieser Endwert der Trajektorie wird nun dafür verwendet, das Drehmoment oder die Beschleunigung des Kraftfahrzeugs auch in Abhängigkeit von dem Endwert der Trajektorie bereitzustellen. Dies bedeutet, dass das Drehmoment beziehungsweise die Beschleunigung nicht nur in Abhängigkeit von dem Höhenprofil, sondern auch in Abhängigkeit von dem bevorstehenden Ende der Trajektorie bereitgestellt wird. Es wird also für das zu ermittelnde Drehmoment beziehungsweise die Beschleunigung ermittelt, wie weit das Kraftfahrzeug noch fahren muss beziehungsweise welcher Zeitraum noch zur Verfügung steht, bis das Kraftfahrzeug das Ziel erreicht hat. Auf diese Weise kann die spezielle Dynamik des Kraftfahrzeugs auch für das automatisierte Führen des Kraftfahrzeugs beachtet werden. Insbesondere ist es nämlich vorteilhaft, wenn bei der Bereitstellung des Drehmoments oder der Beschleunigung die Verzögerung des Kraftfahrzeugantriebs zwischen der Momentenanforderung und der Momentenbereitstellung berücksichtigt wird.

Vorzugsweise ist der Endwert ein Positionswert am Ende der Trajektorie, und eine Entfernung einer aktuellen Position des Kraftfahrzeugs zu dem Endwert wird bestimmt, und die Entfernung wird für das Bereitstellen des Drehmoments oder der Beschleunigung benutzt. Wie oben bereits angedeutet wurde, handelt es sich hier bei dem Endwert um eine Positionsangabe, z.B. um Koordinaten. Aus diesem Ende der Trajektorie, die zum Beispiel die Parkposition darstellen kann, wird die Entfernung zum aktuellen Standort des Kraftfahrzeugs bestimmt. Dies bedeutet, dass ermittelt wird, wie weit das Kraftfahrzeug noch bis zum Ende der Trajektorie fahren muss. Schließlich wird aus dieser Entfernung, d.h. indirekt aus dem Endwert, ein Drehmoment oder eine Beschleunigung ermittelt. Das Drehmoment oder die Beschleunigung, das/die eventuell zur Überwindung eines Bordsteins aufgebracht wird beziehungsweise aufgebracht werden kann, hängt also von der Entfernung bis zum Zielpunkt ab. Wenn beispielsweise nach dem Bordstein nur noch 20 Zentimeter gefahren wird, wird eventuell ein geringeres Drehmoment eingesetzt als für den Fall, dass nach dem Bordstein noch ein Meter gefahren wird. Ursache für die unterschiedlichen Drehmomente ist beispielsweise, dass nach dem Beschleunigen beziehungsweise nach Aufbringen des erhöhten Drehmoments das Kraftfahrzeug sofort abgebremst werden muss, was eine gewisse Zeitdauer beziehungsweise einen gewissen Fahrweg erfordert.

Speziell kann die Entfernung oder eine entsprechende Zeitdauer, die das Kraftfahrzeug bis zum Erreichen des Endes der Trajektorie benötigt, zu einer Begrenzung des Drehmoments oder der Beschleunigung herangezogen werden. So kann beispielsweise eine geringe Entfernung bis zum Zielpunkt zu einer starken Begrenzung des Drehmoments oder der Beschleunigung führen, während eine größere Entfernung zu einer entsprechend geringeren Begrenzung des Drehmoments oder der Beschleunigung führt. Insbesondere kann eine Entfernung oder eine entsprechende Zeitdauer unmittelbar in einen Grenzwert umgewandelt und für die Ermittlung des orts- beziehungsweise zeitabhängigen Drehmoments beziehungsweise der entsprechenden Beschleunigung, eingesetzt werden.

In einer Weiterbildung wird die Entfernung oder die entsprechende Zeitdauer erst bei Erreichen eines Grenzwerts zum Bereitstellen des Drehmoments oder der Beschleunigung genutzt. Dies bedeutet beispielsweise, dass die Entfernung bis zum Ziel erst dann für die Ermittlung des Drehmoments oder der Beschleunigung herangezogen wird, wenn sie unter einem Meter oder einem anderen Entfernungsgrenzwert liegt. Analog hierzu könnte die verbleibende Zeitdauer bis zum Erreichen des Ziels erst dann für die Ermittlung des Drehmoments oder der Beschleunigung herangezogen werden, wenn sie geringer als z.B. zwei Sekunden ist. Ist die Entfernung oder die entsprechende Zeitdauer zum Erreichen des Ziels noch größer als dieser Grenzwert, so kann das Drehmoment beziehungsweise die Beschleunigung des Kraftfahrzeugs unbegrenzt (d.h. im Rahmen der Möglichkeiten des Antriebs des Kraftfahrzeugs beziehungsweise durch andere Vorgaben begrenzt) zur Verfügung gestellt werden.

In einer weiteren Ausgestaltung wird das Drehmoment oder die Beschleunigung entsprechend einem vorgegebenen Gradienten in Bezug auf eine Distanz oder eine Zeitdauer bereitgestellt. Dies wiederum bedeutet, dass die Begrenzung des Drehmoments oder der Beschleunigung nicht fest ist, sondern mit Abnahme der Entfernung beziehungsweise der Restzeit zum Ziel stärker begrenzt wird. Beispielsweise wird ein Drehmoment auf 100 Nm begrenzt, wenn noch zwei Meter bis zum Ziel sind, und auf 50 Nm, wenn nur noch ein Meter zum Ziel ist. Gegebenenfalls sinkt das maximal zulässige Drehmoment linear mit der Abnahme der Distanz beziehungsweise Zeitdauer. Gleiches kann für die Beschleunigung gelten. Die Abnahme des Drehmoments oder der Beschleunigung mit der Verminderung der Distanz beziehungsweise Zeitdauer muss nicht linear sein. Sie kann vielmehr jede beliebige Funktion annehmen.

Besonders vorteilhaft ist, wenn beim Bereitstellen des Drehmoments oder Beschleunigung eine vorgegebene Bereitstellungsverzögerung berücksichtigt wird. Wie oben bereits angedeutet wurde, reagiert ein Kraftfahrzeug in der Regel nicht instantan auf eine Änderungsanfrage bezüglich des Drehmoment oder der Beschleunigung. Dies bedeutet, dass es meist eine Zeitverzögerung von etwa 0,5 bis 2 Sekunden gibt, bis das Kraftfahrzeug auf ein Gasgeben oder Bremsen reagiert. Diese zeitliche Verzögerung beim Bereitstellen des gewünschten Drehmoments oder der gewünschten Beschleunigung kann gerade am Ende einer Trajektorie von wesentlicher Bedeutung sein. Es ist daher von besonderem Vorteil, wenn die an sich bekannte Verzögerung bei der Zurverfügungstellung des Drehmoments oder der Beschleunigung miteinfließt. Ist zum Beispiel die Bereitstellungsverzögerung groß, so kann am Ende der Trajektorie nur ein kleineres Drehmoment zur Verfügung gestellt werden als für den Fall, dass die Bereitstellungsverzögerung geringer ist.

In einer weiteren Ausführungsform ist vorgesehen, dass das Verfahren zum Führen des Kraftfahrzeugs in eine vorgebbare Parkposition genutzt wird. Dies bedeutet, dass das automatisierte Führen des Kraftfahrzeugs hier speziell für eine Parkunterstützung eingesetzt wird. Gerade beim Parken ist es von besonderer Bedeutung, punktgenau eine Parkposition zu erreichen. Daher ist es von Vorteil, gerade hier neben dem Höhenprofil der Trajektorie auch den Endwert der Trajektorie (also z.B. Entfernung oder Zeitdauer bis zum Ziel) für das zur Verfügung zu stellende Drehmoment beziehungsweise die zur Verfügung zu stellende Beschleunigung heranzuziehen.

Konkret kann beim Erfassen des Höhenprofils ein Bordstein erfasst und das Drehmoment oder die Beschleunigung zur Überwindung des Bordsteins durch das Kraftfahrzeug bereitgestellt werden. Gerade im Bereich von Parkplätzen sind Bordsteine oftmals zu überqueren. Dabei können die Bordsteine eine unterschiedliche Höhe besitzen. Ist jedoch die Höhe des jeweiligen Bordsteins bekannt, so kann das entsprechend notwendige Drehmoment oder die notwendige Beschleunigung zur Verfügung gestellt werden.

Mittels des oben geschilderten Verfahrens kann ein Fahrerassistenzsystem und insbesondere ein Parkhilfesystem realisiert werden, welches den Fahrer bei dem Parkvorgang beziehungsweise dem entsprechenden Manöver unterstützt. Insbesondere wird der Fahrer durch ein semi-autonomes beziehungsweise vollautonomes Manövrieren unterstützt. Speziell kann das Fahrerassistenzsystem als Parkassistenzsystem ausgeführt sein. Bei einem entsprechenden Parkvorgang kann dann in der Parklücke und/oder angrenzend an die Parklücke ein bodennahes Objekt positioniert sein. Das bodennahe, der Parklücke zugeordnete Objekt kann beispielsweise ein niedriges, länglich ausgedehntes Objekt, insbesondere ein Bordstein beziehungsweise Randstein, sein, welcher einen ersten Bereich auf einem Niveau eines Bodens beziehungsweise einer Fahrbahnoberfläche des Kraftfahrzeugs von einem gegenüber dem ersten Bereich zweiten Bereich trennt. Der zweite Bereich ist also als eine Stufe ausgebildet, wobei das Objekt den Übergang zwischen dem ersten und dem zweiten Bereich ausbildet. Das bodennahe Objekt kann aber beispielsweise auch ein Parkpoller, ein Stein oder eine niedrige Mauer als Begrenzung eines befahrbaren Bereichs sein. Das bodennahe Objekt kann dabei derart in der Parklücke angeordnet sein, dass es während des Einparkens von zumindest zwei Rädern des Kraftfahrzeugs überwunden beziehungsweise überfahren wird. Es stellt also auf der abzufahrenden Trajektorie einen markanten Bereich im Höhenprofil dar.

Das Objekt kann derart in der Parklücke angeordnet sein, dass das Kraftfahrzeug nach Beendigung des Parkvorgangs in einer Parkstellung mit zumindest zwei Rädern auf dem Objekt platziert beziehungsweise positioniert ist oder das Objekt von dem Kraftfahrzeug umfahren werden muss.

Die oben genannte Aufgabe wird erfindungsgemäß auch durch ein Kraftfahrzeug mit dem soeben genannten Fahrerassistenzsystem gelöst. Das Kraftfahrzeug ist insbesondere als ein Personenkraftwagen ausgebildet.

Die in Bezug auf das erfindungsgemäße Verfahren vorgestellten Variationsmöglichkeiten und Vorteile gelten sinngemäß auch für das erfindungsgemäße Kraftfahrzeug. Dabei sind die genannten Verfahrensmerkmale als funktionelle Merkmale mit entsprechenden Mitteln des Kraftfahrzeugs zu sehen.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Ausführungsbeispiele der Erfindung werden nachfolgend anhand schematischer Zeichnungen näher erläutert.

Dabei zeigen:
- Fig. 1: eine schematische Darstellung einer Ausführungsform eines erfindungsgemäßen Kraftfahrzeugs; und
- Fig. 2: ein Blockdiagramm eines Ausführungsbeispiels eines erfindungsgemäßen Verfahrens zum automatisierten Führen eines Kraftfahrzeugs.

Die nachfolgend näher geschilderten Ausführungsbeispiele stellen bevorzugte Ausführungsformen der vorliegenden Erfindung dar.

Üblicherweise ist zur Steuerung eines Kraftfahrzeugs in Längsrichtung die Beschleunigung der einzige Parameter, der beachtet wird. In Ausnahmefällen, wenn ein Bordstein detektiert und überwunden werden soll, kommt ein entsprechender Drehmomentparameter hinzu. Es gibt jedoch einen weiteren Parameter, der normalerweise die Kraftfahrzeug-Performance in verschiedenen Situationen beeinflusst. Dies ist das interne Moment, das im Inneren der Antriebsmaschine aufgebaut wird, wenn ein Drehmoment oder eine Beschleunigung über eine gewisse Zeitdauer angefordert wird.

Das interne Moment kann aufgebaut werden, wenn eine bestimmte Beschleunigung für längere Zeit angefordert wird, wobei sich das Kraftfahrzeug nicht proportional bewegt, d.h. es ergibt sich eine Verzögerung der Antwort der Antriebsmaschine auf die Beschleunigungsanfrage. Bei Kraftfahrzeugen mit Verbrennungskraftmaschine liegt die Zeitdauer von dem Zeitpunkt, zu dem eine Beschleunigungsanfrage auf den Bus gesendet wird, zu dem Zeitpunkt, zu dem die Leistung tatsächlich an den Rädern ankommt (d.h. die Geschwindigkeit des Kraftfahrzeugs beginnt sich zu ändern), meist irgendwo im Bereich von 500 Millisekunen bis 2 Sekunden. Diese "längere Zeit" muss mindestens verstreichen, bis sich das Kraftfahrzeug entsprechend wunschgemäß bewegt. Während dieser Zeit wird das Kraftfahrzeug noch nicht beschleunigt, d.h. es findet keine proportionale Bewegung statt.

Das interne Moment kann aufgebaut werden, indem schrittweise mehrere Drehmomentwerte angefordert werden, um ein Hindernis zu überwinden. So wird beispielsweise ein Hindernis überwunden, indem zunächst ein Minimalwert des Drehmoments für wenige Millisekunden angefordert wird. Falls man nicht die erwartete Ausgangsleistung in Form von Kraftfahrzeugbewegung erhält, kann der Drehmomentwert solange schrittweise erhöht werden, bis die gewünschte Ausgangsleistung gemessen als Kraftfahrzeuggeschwindigkeit erreicht wird. Bei dieser Vorgehensweise werden also schrittweise mehrere Drehmomentwerte angefordert.

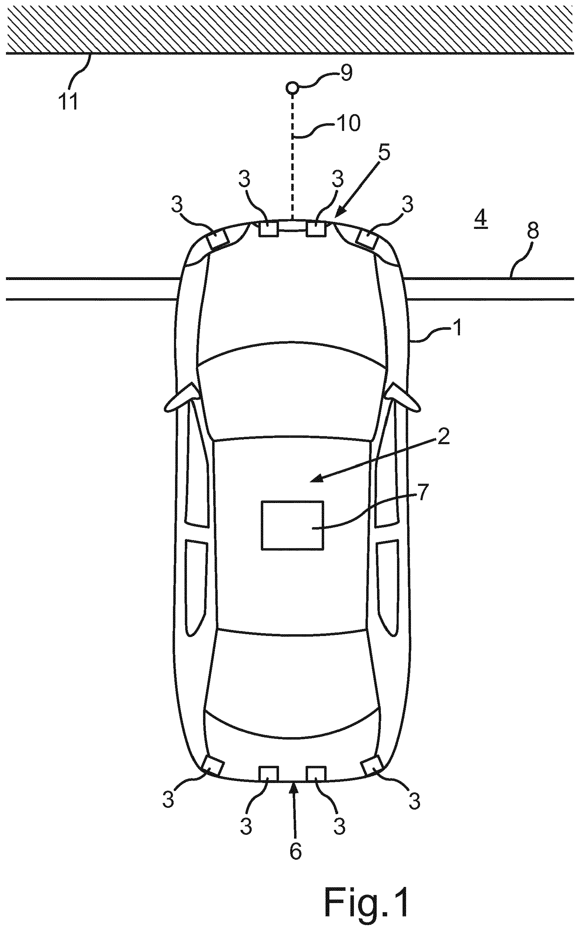

Fig. 1 zeigt ein Kraftfahrzeug 1 gemäß der vorliegenden Erfindung in einer typischen Einparksituation. Das Kraftfahrzeug 1 ist im vorliegenden Fall als ein Personenkraftwagen ausgebildet. Das Kraftfahrzeug 1 umfasst ein Fahrerassistenzsystem 2, welches dazu ausgelegt ist, einen Fahrer des Kraftfahrzeugs 1 bei einem Parkvorgang oder einem anderen Manöver zu unterstützen. Das Fahrerassistenzsystem 2 kann beispielsweise dazu ausgelegt sein, das Kraftfahrzeug 1 zumindest semi-autonom zu manövrieren. Dazu kann das Fahrerassistenzsystem 2 in eine Lenkung sowie zum vollautonomen Manövrieren in ein Antriebs- beziehungsweise Bremssystem des Kraftfahrzeugs 1 eingreifen. Das Fahrerassistenzsystem 2 weist zumindest eine Sensoreinrichtung 3 auf, welche dazu ausgelegt ist, Sensordaten aus einem Umgebungsbereich 4 des Kraftfahrzeugs 1 zu erfassen. Im vorliegenden Fall weist das Fahrerassistenzsystem 2 acht Sensoreinrichtungen 3 auf, welche hier als Ultraschallsensoren ausgebildet sind. Die Sensoreinrichtungen können aber auch Radarsensoren und/oder Lidarsensoren und/oder Kameras aufweisen. Dabei sind hier vier Ultraschallsensoren in einem Frontbereich 5 des Kraftfahrzeugs 1 angeordnet und dienen dazu, Sensordaten aus dem Umgebungsbereich 4 vor dem Kraftfahrzeug 1 zu erfassen. Vier weitere Ultraschallsensoren 3 sind in einem Heckbereich 6 des Kraftfahrzeugs 1 angeordnet und dienen dazu, Sensordaten aus dem Umgebungsbereich 4 hinter dem Kraftfahrzeug 1 zu erfassen. Demnach kann eine Trajektorie mit entsprechender Erfassung des Umgebungsbereichs 4 und einer Höhenprofilerfassung von dem Kraftfahrzeug 1 auch rückwärts abgefahren werden.

Die Sensordaten können einer Recheneinrichtung 7 des Fahrerassistenzsystems 2 bereitgestellt werden. Die Recheneinrichtung 7 kann beispielsweise in ein Kraftfahrzeugseitiges Steuergerät integriert sein. Die Recheneinrichtung 7 dient dazu, die Sensordaten der Sensoreinrichtung 3 auszuwerten und anhand der Sensordaten Objekte, insbesondere Bordsteine 8 in dem Umgebungsbereich 4 zu erkennen sowie deren jeweilige Höhe und Position zu bestimmen. Insbesondere ist die Recheneinrichtung 7 also dazu ausgelegt, das erkannte Objekt als ein bodennahes, niedriges und länglich ausgedehntes Objekt, beispielsweise als einen Bordstein zu klassifizieren. Außerdem kann die Recheneinrichtung 7 das Objekt als für das Kraftfahrzeug 1 überfahrbar oder nicht überfahrbar bewerten. Dazu kann von der Recheneinrichtung 7 eine Höhe des Objekts bezüglich einer Fahrbahn des Kraftfahrzeugs 1 erfasst werden und das Objekt als für das Kraftfahrzeug 1 überfahrbar klassifiziert werden, falls die Höhe einen vorbestimmten Höhengrenzwert unterschreitet. Anderenfalls wird das Objekt als nicht überfahrbar für das Kraftfahrzeug 1 bewertet und das Objekt als Hindernis betrachtet. Beispielsweise kann das Hindernis automatisch umfahren werden und/oder das Kraftfahrzeug 1 automatisch vor dem Hindernis abgebremst werden.

In dem in Fig. 1 dargestellten Beispiel befindet sich das Kraftfahrzeug 1 in einem automatisierten Einparkmodus. Dies bedeutet, dass das Kraftfahrzeug 1 semi-autonom oder autonom in eine Parkposition fährt und dort beispielsweise mit seiner Spitze eine Zielposition 9 erreicht. Hierzu muss das Kraftfahrzeug 1 ausgehend von der in Fig. 1 dargestellten aktuellen Position einer Trajektorie 10 folgen, um den Zielpunkt 9 zu erreichen. Der Zielpunkt 9 stellt also das Ende der Trajektorie 10 dar. Die Spitze des Kraftfahrzeugs 1 in der aktuellen Position bis zu dem Zielpunkt 9 entspricht der Entfernung, die das Kraftfahrzeug entlang der Trajektorie 10 noch zurückzulegen hat. Mit einer vorgegebenen Geschwindigkeit beziehungsweise einem vorgegebenen Geschwindigkeitsprofil erreicht das Kraftfahrzeug den Zielpunkt 9 nach einer entsprechenden Zeitdauer.

In der aktuellen Position des Kraftfahrzeugs 1 befinden sich dessen Vorderräder an dem von der Sensoreinrichtung 3 bereits erfassten Bordstein 8. Das Kraftfahrzeug 1 muss also, um den Bordstein 8 mit den Vorderrädern zu überwinden, ein geeignetes Drehmoment beziehungsweise eine geeignete Beschleunigung aufbringen, um der Trajektorie 10 weiter zu folgen.

In dem vorliegenden Beispiel von Fig. 1 ist der Parkplatz frontseitig durch eine Mauer 11 begrenzt. Alternativ könnte an der Stelle der Mauer auch ein weiteres geparktes Kraftfahrzeug stehen. In jedem Fall ist es wichtig, dass das Kraftfahrzeug 1 bei dem Manöver beziehungsweise dem Einparkvorgang exakt an dem Zielpunkt 9 zum Stehen kommt. Da aber der Bordstein 8 zu überwinden ist und daher ein erhöhtes Drehmoment angefordert wird, sind weitere Maßnahmen notwendig, um den Zielpunkt 9 exakt zu erreichen. Dies liegt vor allem daran, dass das Dynamiksystem des Kraftfahrzeugs 1 eine vorbestimmte Reaktionszeit besitzt. Nach dem Anfordern eines positiven Drehmoments bis zur tatsächlichen Umsetzung vergeht in der Regel die oben genannte Zeitspanne von 0,5 Sekunden bis 2 Sekunden. Ähnliches gilt für das Realisieren eines negativen Drehmoments (Bremsen) zwischen Anforderung und tatsächlicher Umsetzung. In bisher bekannten Systemen gibt es keine Rückkopplung basierend auf der Drehmomentanfrage. Es werden also die Effekte des internen Moments beziehungsweise die Verzögerung des tatsächlichen Moments generell nicht beachtet.

In ähnlicher Weise wird, wenn eine Beschleunigungsanfrage über einen längeren Zeitraum (z.B. mehr als 2 s) vorliegt, ein internes Moment aufgebaut, was seinerseits nicht bei einer Bremsanfrage berücksichtigt wird. Dies bedeutet, dass die Wirkung der Beschleunigungsanfrage um die vorhin genannte interne Verzögerung nachwirkt. Dies kann zur Folge haben, dass ein wesentlich stärkeres Bremsen notwendig ist als die momentane Geschwindigkeit vermuten lässt. Infolge dieser Problematik liegt die Brems-Performance deutlich unter einem Optimum, sodass entweder die Bremsdistanz zu kurz berechnet wird oder der Bremsdruck nicht hoch genug ist, um dem zusätzlich vorhandenen Beschleunigungsmoment entgegenzuwirken.

Um diese Probleme zu überwinden wird entsprechend einem Ausführungsbeispiel ein Rückkopplungssystem vorgeschlagen, das verhindern soll, dass das interne Moment (zu sehr) aufgebaut wird, wenn die Bremsdistanz beziehungsweise die verbleibende Entfernung zum Zielpunkt zu klein ist.

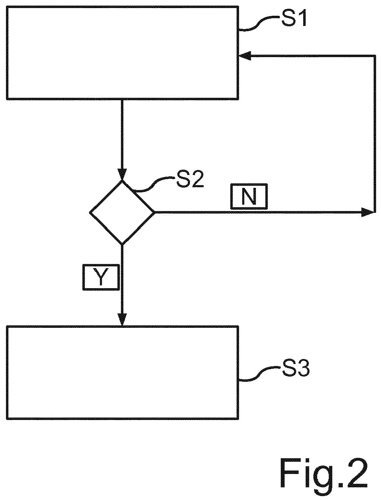

Fig. 2 zeigt ein solches Rückkopplungssystem mit geschlossener Schleife. Ein derartiges System kann in den Antrieb eines Kraftfahrzeugs integriert sein. In einem ersten Schritt S1 wird die verbleibende Entfernung für die aktuelle Trajektorie in Echtzeit überprüft. In einem anschließenden Entscheidungsschritt S2 wird entschieden, ob die verbleibende Entfernung kleiner beziehungsweise kleiner gleich einem kritischen Wert beziehungsweise Grenzwert ist. Ist dies nicht der Fall ("N"), so wird zu Schritt S1 zurückgesprungen. Anderenfalls, wenn die verbleibende Distanz kleiner beziehungsweise kleiner gleich dem kritischen Wert, der vorgegeben sein kann, ist ("Y"), so wird in einem anschließenden Schritt S3 ein Signal an die Antriebsmaschine geschickt, die das Drehmoment beziehungsweise die Beschleunigung beschränkt.

Beispielsweise wird bei dem Prüfen in Schritt S2 ein Flag gesetzt, um anzuzeigen, dass die verbleibende Entfernung nun kritisch ist. Basierend auf diesem Flag muss die Antriebssteuerungseinheit sicherstellen, dass das interne Moment nicht beziehungsweise nur beschränkt aufgebaut wird.

Das Blockdiagramm von Fig. 2 zeigt also, dass eine zusätzliche Rückkopplung in der Längssteuerfunktion bereitgestellt wird, indem die verbleibende Entfernung dieser Funktion zur Verfügung gestellt wird. Konkret kann so eine kontinuierliche Überwachung der verbleibenden Entfernung erfolgen, und sobald sie unter einen kritischen Wert sinkt, kann eine entsprechende Rückkopplung an die Antriebssteuereinheit erfolgen, um das Drehmoment beziehungsweise die Beschleunigung zu beschränken.

In einem beispielhaften Szenario, in dem die verbleibende Entfernung zum Ziel sehr gering ist, kann auf dem Fahrweg ein niedriges Hindernis bestehen, was zuvor von den Sensoren nicht erkannt wurde. Normalerweise würde das Kraftfahrzeug versuchen, dieses unerwartete, niedrige Hindernis zu überfahren, indem von der Maschine mehr Leistung angefordert wird oder indem die Beschleunigung erhöht wird. Ein derartiger Leistungsanstieg, bei dem zwar das Hindernis überwunden wird, wäre wegen der geringen verbleibenden Entfernung unerwartet. Diese Bremsdistanz wäre unter Umständen zu gering und daher könnte es zu einer Kollision kommen. Entsprechend dem Flussdiagramm von Fig. 2 wird nun die Drehmoment- beziehungsweise Beschleunigungsanfrage überwacht und sie wird entsprechend unter einer Grenze gehalten, die ein rechtzeitiges Bremsen ermöglicht.

Insbesondere kann vorgesehen sein, dass bei einem nicht vorher detektierten Bordstein beim semi-autonomen oder autonomen Einparken in Abhängigkeit von dem verbleibenden Abstand zur Begrenzung der Parklücke ein Gradient verwendet wird, um das Drehmoment oder die Beschleunigung entsprechend der verbleibenden Entfernung beziehungsweise der verbleibenden Fahrtzeit anzupassen. Auf diese Weise kann ermöglicht werden, dass das Kraftfahrzeug nicht mit zu viel Kraft oder mit einer zu hohen Beschleunigung über den Bordstein gehoben wird, wodurch ein Abbremsen zur Begrenzung der Parklücke nicht mehr rechtzeitig möglich wäre.

## Patentansprüche

1. Verfahren zum automatisierten Führen eines Kraftfahrzeugs (1) durch
- Erfassen eines Höhenprofils auf einer von dem Kraftfahrzeug abzufahrenden Trajektorie (10) und
- Bereitstellen eines Drehmoments oder einer Beschleunigung in Abhängigkeit von dem Höhenprofil,
**gekennzeichnet durch**
- Ermitteln eines Endwerts (9) der Trajektorie (10), wobei
- das Drehmoment oder die Beschleunigung auch von dem Endwert der Trajektorie (10) abhängig bereitgestellt wird.

2. Verfahren nach Anspruch 1,
**dadurch gekennzeichnet, dass**
der Endwert (9) ein Positionswert am Ende der Trajektorie (10) ist, und eine Entfernung einer aktuellen Position des Kraftfahrzeugs (1) zu dem Endwert bestimmt (S1) und die Entfernung für das Bereitstellen des Drehmoments oder der Beschleunigung benutzt wird.

3. Verfahren nach Anspruch 2,
**dadurch gekennzeichnet, dass**
die Entfernung oder eine entsprechende Zeitdauer, die das Kraftfahrzeug (1) bis zum Erreichen des Endes der Trajektorie (10) benötigt, zu einer Begrenzung (S3) des Drehmoments oder der Beschleunigung herangezogen wird.

4. Verfahren nach Anspruch 3,
**dadurch gekennzeichnet, dass**
die Entfernung oder die entsprechende Zeitdauer erst bei Erreichen eines Grenzwerts (S2) zum Bereitstellen des Drehmoments oder der Beschleunigung genutzt wird.

5. Verfahren nach einem der vorhergehenden Ansprüche
**dadurch gekennzeichnet, dass**
das Drehmoment oder die Beschleunigung entsprechend einem vorgegebenen Gradienten in Bezug auf eine Distanz oder eine Zeitdauer bereitgestellt wird.

6. Verfahren nach einem der vorhergehenden Ansprüche,
**dadurch gekennzeichnet, dass**
beim Bereitstellen des Drehmoments oder der Beschleunigung eine vorgegebene Bereitstellungsverzögerung berücksichtigt wird.

7. Verfahren nach einem der vorhergehenden Ansprüche,
**dadurch gekennzeichnet, dass**
das Verfahren zum Führen des Kraftfahrzeugs (1) in eine vorgebbare Parkposition genutzt wird.

8. Verfahren nach einem der vorhergehenden Ansprüche,
**dadurch gekennzeichnet, dass**
beim Erfassen des Höhenprofils ein Bordstein (8) erfasst und das Drehmoment oder die Beschleunigung zur Überwindung des Bordsteins (8) durch das Kraftfahrzeug (1) bereitgestellt wird.

9. Fahrerassistenzsystem (2) zur Durchführung eines Verfahrens nach einem der vorhergehenden Ansprüche.

10. Kraftfahrzeug (1) mit einem Fahrerassistenzsystem (2) nach Anspruch 9.
